# EUROPEAN PATENT SPECIFICATION

(11) **EP 3 574 674 B1**
(45) Date of publication and mention of the grant of the patent: **03.11.2021**
(21) Application number: 17706193.4
(22) Date of filing: 16.02.2017
(51) Int. Cl.: H04W 24/08, H04L 12/24, H04W 88/18, H04W 92/02, H04W 84/00, H04L 12/26

(54) **A NETWORK MONITORING ENTITY, METHOD, SYSTEM AND COMPUTER PROGRAM FOR A COMMUNICATION NETWORK IMPLEMENTING NETWORK SLICES**
NETZWERKÜBERWACHUNGSEINHEIT, VERFAHREN, SYSTEM UND PROGRAMM FÜR EIN NETZWERK-SLICES IMPLEMENTIERENDES KOMMUNIKATIONSNETZ
ENTITÉ DE SURVEILLANCE DE RÉSEAU, PROCÉDÉ, SYSTÈME ET PROGRAMME POUR UN RÉSEAU DE COMMUNICATION IMPLÉMENTANT DES TRANCHES DE RÉSEAU

(43) Date of publication of application: 04.12.2019
(73) Proprietor: Huawei Technologies Duesseldorf GmbH, 40549 Düsseldorf (DE)
(72) Inventor: POE, Wint Yi, 80992 Munich (DE); VAISHNAVI, Ishan, 80992 Munich (DE)
(74) Representative: Körber, Martin Hans
(86) International application number: PCT/EP2017/053533
(87) International publication number: WO 2018/149498

(56) References cited:
- WO-A1-2015/139732
- US-A1- 2016 294 664
- VAISHNAVI ISHAN ET AL: "An architecture for co-ordinated monitoring for multi-provider cloud platforms", 2014 IEEE GLOBECOM WORKSHOPS (GC WKSHPS), IEEE, 8 December 2014 (2014-12-08), pages 1-6, XP032747901, DOI: 10.1109/GLOCOMW.2014.7063412 [retrieved on 2015-03-18]
- RICCARDO GUERZONI ET AL: "Analysis of end-to-end multi-domain management and orchestration frameworks for software defined infrastructures: an architectural survey", TRANSACTIONS ON EMERGING TELECOMMUNICATIONS TECHNOLOGIES, vol. 28, no. 4, 13 September 2016 (2016-09-13), pages 1-19, XP055373132, ISSN: 2161-3915, DOI: 10.1002/ett.3103
- POE WINT YI ET AL: "System architecture of Intelligent Monitoring in multi-domain orchestration", 2017 EUROPEAN CONFERENCE ON NETWORKS AND COMMUNICATIONS (EUCNC), IEEE, 12 June 2017 (2017-06-12), pages 1-5, XP033122196, DOI: 10.1109/EUCNC.2017.7980673 [retrieved on 2017-07-13]

## Description

### TECHNICAL FIELD

In general, the present invention relates to the field of communication networks and network slicing. More specifically, the present invention relates to a network monitoring entity for a communication network with a plurality of sub-networks configured to support at least a portion of a network slice.

### BACKGROUND

In the 5th Generation (5G) mobile technology, a key issue will be to enable cross-domain orchestration of services over multiple administrations or different technological domains in a single administration. In each administration, e.g., an operator network provided by a mobile network provider, there exists generally one Multi-Domain Orchestration (MdO) entity to manage services requested by customers across its underlying different technological domains or across multiple administrations. The services can include but are not limited to network slice deployment, network slice monitoring, assurance and Service Level Agreement (SLA) management.

It is foreseeable that in cellular communication networks based on the 5G architecture, customers will have complex slice requests. When a MdO receives a slice request from a customer, the MdO, or more specifically a so-called Request Receiving MdO (RR-MdO), checks the slice requirements and its availability of service and resource. The RR-MdO can offer either a complete or a partial slice in response to the customer's request. In the first case, the whole slice can be deployed across the different technological domains of the MdO. In the latter case, a partial slice can be deployed in the RR-MdO and the remaining slice can be distributed to other MdOs, e.g. other mobile network operators. The MdOs receiving such a partial slice request can check their availabilities and may make an offer to the request together with SLA pricing policies. In both cases, the RR-MdO can offer the slice with an SLA pricing policy to the customer. As soon as the customer accepts the offer, the slice is deployed across multi-domain environment. It has been suggested that a network entity in the form of an intelligent monitoring system (IMoS) in the MdO can subsequently start monitoring the installed (partial) slice.

Generally, slice monitoring in the MdO requires end-to-end QoS guaranteed probe selection and deployment, which directly relates to the overall performance of monitoring accuracy for assurance and SLA management. The currently proposed 5G architecture does not provide any means for cross-domain monitoring between multiple administrations/operators. Each administration comprising multiple domains provides its own centralized monitoring management system. Generally, the centralized monitoring management system is designed to provide for the same technological domains which are supposed to have the same Local Monitoring System (LMS). However, multiple domains in a single administration may not be using the same technology. Even though a centralized monitoring management system can provide a solution for different technological domains, coordination across MdOs, e.g. mobile network operators, is still missing. None of the current solutions supports intelligent functionalities and coordination across MdOs.

Some previous works have tried to address the problem of slice monitoring in a multi-domain environment. For example, a centralized monitoring system has been proposed under the name Zabbix (www.zabbix.com). According to this system configurations at a central-server are required whenever a new entity has to be monitored. It implies that these systems cannot provide heterogeneous LMSs automatically. However, this functionality is a fundamental requirement for a monitoring system in a multi-domain environment.

WO/2015/139732 provides a basic idea of a monitoring system and a monitoring method for software defined networks, as far as coordination of probes and moving of probes from one location to another is concerned. However, it does not take into consideration the fact that different domains can have different probes and may not be able to support some existing probes. This issue should be addressed in order to enable the monitoring system to function appropriately.

When a RR-MdO receives a slice request, the request can be served by splitting the requested slice into sub-slices deployed either across multiple operators or across different technological domains in a single operator. Generally, different slices have different requirements, i.e., Key Performance Indicators (KPIs). After the actual deployment of (sub-)slices, the LMSs in the domains, wherein (sub-)slices are installed, can start instantiation of monitoring probes for specific KPIs. Then the collected data from probes are aggregated to evaluate end-to-end monitoring.

Since each domain has its own probes and monitoring policies, the probe selection for each KPI is solely conducted within a local domain. The most appropriate probe in one domain may not be the best probe for the end-to-end slice monitoring. This means that an appropriate probe in one domain may not be aligned or incompatible with the probes selected in other domains. In the worst case, some domains may not have appropriate probes for the slice monitoring. As a result, the probe selection in each technological domain only leads to local optima, which may hinder end-to-end monitoring accuracy.

Moreover, a large number of slice requests are expected in 5G networks, requiring a large number of slice monitoring. In order to select the correct probe from the correct domain, a huge amount of interactions is required between the MdO and the corresponding domains. Thus, these multiple interactions increase overheads and processing time, which can impair overall performance.

A straightforward approach to solve these problems is to define a standard probe profile for each Key Performance Indicator (KPI). However, different technologies support different monitoring frameworks and policies, wherein reconfiguration can be impossible due to their proprietary software. Moreover, there exist a huge amount of KPIs needed to define their standard probe profiles, which is not scalable and seems unrealistic.

In light of the above, there is a need for an improved network monitoring entity as well as a corresponding method for a communication network with a plurality of sub-networks, allowing a global monitoring configuration and improving monitoring accuracy.

VAISHNAVI ISHAN et al, "An architecture for co-ordinated monitoring for multi-provider cloud platforms", 2014 IEEE GLOBECOM WORKSHOPS, 20141208, discloses an architecture for a centralized monitoring system that coordinates the operation of individual domain-dependent monitoring system,

### SUMMARY

It is an object of the invention to provide an improved network monitoring entity and a method for a communication network with a plurality of sub-networks, as well as a corresponding communication system and computer program, allowing a global monitoring configuration and improving monitoring accuracy.

The foregoing and other objects are achieved by the subject matter of the independent claims. Further implementation forms are apparent from the dependent claims, the description and the figures.

The following disclosure employs a plurality of terms which, in embodiments, have the following meaning: Multi-domain - either multiple administrations, including multi-operator, or multiple technological domains in a single administration, e.g., operator network. Technological domain - a sub-network of an administrative domain which composes of a group of computers and devices on a network that are administered as a unit with common rules and procedures. Multi-Domain Orchestration/Orchestrator (MdO) - multi-domain orchestration/orchestrator in a single administration, e.g., operator network, for service orchestration. Request-Receiving MdO (RR-MdO) - a MdO that receives requests from customers and is responsible for splitting the requested slice among other MdOs and aggregating end-to-end slice monitoring, if necessary. Domain Orchestration/Orchestrator (DO) - domain orchestration/orchestrator used to provide orchestration of computing and network resources of the infrastructure, and to deploy (sub-) slice upon the infrastructure, and interwork with MdO for (sub-) slice monitoring. Slice - a service request which is defined by customers and may be realized across administrative domains or across multiple technological domains in a single administrative domain. Slice monitoring - an end-to-end monitoring of performance or other KPIs of slice typically required by the administrator or customers. Operator - an owner of a MdO who orchestrates services over cross-domains and may or may not own the physical infrastructure. Intelligent Monitoring System (IMoS) - an intelligent monitoring system for MdO supporting intelligent functionalities, e.g., end-to-end probe selection and optimal probe deployment across administrative domains or across multiple technological domains in a single administrative domain. The IMoS should be independent of the different local monitoring systems from different technological domains. Local Monitoring System (LMS) - a local monitoring system responsible for each technological domain. In principle, an LMS has its own mechanism for monitoring probe selection and deployment in its technological domain. Probe Catalogue - a set of monitoring probes stored in IMoS which composes of the set of monitoring probes from the LMSs in the same administration and which may compose of a partial set of monitoring probes from other IMoSs.

Generally, the present invention relates to a monitoring network entity, i.e., an Intelligent Monitoring System (IMoS), and a method for a communication network to achieve a global monitoring configuration and to improve monitoring accuracy. More specifically, the present invention synergizes the Intelligent Monitoring System (IMoS) with a probe catalogue, its management system and relevant interfaces. An Interface for a Local Monitoring System (I-LMS) can be used to exchange potential information regarding the probes from the Local Monitoring System (LMS) to the Intelligent Monitoring System (IMoS). This interface can be a standardized interface to exchange probes, probe catalogues, and Key Performance Indicators (KPIs) between IMoS and different LMSs from different technological domains. The probe information collected from LMSs can be stored in the IMoS as a probe catalogue. The probe selection can be performed by using the information from the probe catalogue. IMoS can select the correct probe from the correct domain which results a guaranteed end-to-end slice monitoring accuracy across the MdOs. After the probe selection, the IMoS can use the same interface, i.e., I-LMS, to send the probe information to the corresponding LMS and to instantiate the correct probe. If necessary, the IMoS can also send the information to instantiate a new on-demand probe to the correct domain via the same interface.

To invoke an end-to-end probe selection across the MdOs, the IMoS can use a further interface, an Interface for an Intelligent Monitoring System (I-IMoS) between different IMoSs. This interface can be used to exchange Key Performance Indicators (KPIs), probe information, and on-demand probes and to ensure that the correct probe is selected from the correct domain in each MdO. An on-demand probe refers to a specific probe, i.e., a specific program required in specific MdO to make sure that the correct probe is selected from the correct domain. Generally, this action takes place when the correct probe is not available at a specific MdO. The exchanged information can include but is not limited to probe names, parameters, probe deployment costs including both the financial and resource related costs, probe running costs, probe dependencies, etc.

Embodiments of the present invention enable network operators/administrations to achieve a global monitoring configuration by optimal probe selection and deployment in slice-monitoring, to improve monitoring accuracy for assurance and management of Service Level Agreement (SLA), and to synergize LMSs with IMoSs via the monitoring abstraction layer interfaces, I-LMS and I-IMoS, respectively.

Thus, according to a first aspect the invention relates to a network monitoring entity for a communication network configured to support, i.e. implement at least a portion of a network slice, wherein the communication network comprises a plurality of sub-networks and each sub-network is configured to support, i.e. comprises network resources to support at least a sub-portion of the portion of the network slice. The network entity can be implemented as an Intelligent Monitoring System (IMoS). The network entity comprises: a communication interface configured to communicate with a plurality of sub-network monitoring units, in particular LMSs, wherein each sub-network monitoring unit comprises at least one monitoring probe and each monitoring probe is configured to monitor, i.e. to provide information about at least one performance measure of the sub-portion of the portion of the network slice of the communication network supported by the sub-network, wherein the monitoring probes of the plurality of sub-network monitoring units define a set of monitoring probes, i.e. a probe catalogue; and a processor configured to select one or more monitoring probes from the set of monitoring probes for monitoring the portion of the network slice supported by the communication network.

Thus, an improved network monitoring entity is provided allowing a global monitoring configuration and improving monitoring accuracy.

In a first possible implementation form of the network monitoring entity according to the first aspect as such, the processor is further configured to inform the one or more sub-network monitoring units associated with the one or more monitoring probes via the communication interface about the selected one or more monitoring probes for deploying the selected one or more monitoring probes in the sub-networks.

In a second possible implementation form of the network monitoring entity according to the first aspect as such or the first implementation form thereof, the network monitoring entity further comprises a memory configured to store information about the set of monitoring probes, i.e. the probe catalogue.

In a third possible implementation form of the network monitoring entity according to the second implementation form of the first aspect, the information about the set of monitoring probes, i.e. the probe catalogue, comprises information about the at least one performance measure of the sub-portion of the portion of the network slice monitored by a monitoring probe, monitoring probe identifiers, monitoring probe deployment costs, monitoring probe execution costs, monitoring probe dependencies on the existence of other monitoring probes and/or monitoring probe conflicts with the existence of other monitoring probes or software components.

In a fourth possible implementation form of the network monitoring entity according to the second or third implementation form of the first aspect, the processor is configured to collect the information about the set of monitoring probes, i.e. the probe catalogue, via the communication interface from the plurality of sub-network monitoring units.

In a fifth possible implementation form of the network monitoring entity according to the first aspect as such or any one of the first to fourth implementation form thereof, the processor is further configured to collect from the selected one or more monitoring probes data about the corresponding performance measures of the respective sub-portion of the portion of the network slice.

In a sixth possible implementation form of the network monitoring entity according to the fifth implementation form of the first aspect, the network monitoring entity further comprises a memory and the processor is configured to store the data collected from the one or more monitoring probes about the corresponding performance measures of the sub-portion of the portion of the network slice in the memory.

In a seventh possible implementation form of the network monitoring entity according to the first aspect as such or the first implementation form thereof, a further portion of the network slice is supported by a further communication network (provided, for instance, by a different mobile network operator), wherein the communication interface of the network entity is configured to provide information about the set of monitoring probes to a communication interface of a corresponding further network monitoring entity of the further communication network.

In an eighth possible implementation form of the network monitoring entity according to the first aspect as such or any one of the first to seventh implementation form thereof, the processor is configured to select the one or more monitoring probes from the set of monitoring probes, i.e. the probe catalogue, for monitoring the portion of the network slice supported by the communication network, in response to a network slice monitoring request received via the communication interface.

In a ninth possible implementation form of the network monitoring entity according to the first aspect as such or any one of the first to eighth implementation form thereof, the at least one performance measure of the sub-portion of the portion of the network slice is a delay measure, a bandwidth measure, a CPU utilization measure, a disk space utilization measure, a memory utilization measure, a data traffic distribution measure and/or a data packet loss measure.

According to a second aspect the invention relates to a communication system comprising a first communication network and a second communication network, wherein the first and second communication network each comprise a network managing entity according to the first aspect of the invention. The communication system further comprises an interface for exchanging monitoring probe information between the network managing entities, in particular information about the monitoring probes of the respective sets of monitoring probes, i.e. the respective probe catalogues, of the respective network managing entities.

According to a third aspect the invention relates to a corresponding network monitoring method in a communication network configured to support, i.e. implement at least a portion of a network slice, wherein the communication network comprises a plurality of sub-networks and each sub-network is configured to support, i.e. comprises network resources to support at least a sub-portion of the portion of the network slice. The method comprises: communicating with a plurality of sub-network monitoring units, in particular LMSs, via a communication interface, wherein each sub-network monitoring unit comprises at least one monitoring probe and each monitoring probe is configured to monitor, i.e. to provide information about at least one performance measure of the sub-portion of the portion of the network slice of the communication network supported by the sub-network, wherein the monitoring probes of the plurality of sub-network monitoring units define a set of monitoring probes, i.e. a probe catalogue; and selecting one or more monitoring probes from the set of monitoring probes for monitoring the portion of the network slice supported by the communication network.

In a first possible implementation form of the method according to the third aspect as such, the method comprises the further step of informing the one or more sub-network monitoring units associated with the one or more monitoring probes via the communication interface about the selected one or more monitoring probes for deploying the selected one or more monitoring probes in the sub-networks.

In a second possible implementation form of the method according to the third aspect as such or the first implementation form thereof, the method comprises the further step of storing information about the set of monitoring probes, i.e. the probe catalogue, in a memory.

According to a fourth aspect the invention relates to a computer program comprising program code adapted to, when executed on a network monitoring unit, to configure the network monitoring unit to perform the method (600) of the third aspect.

The invention can be implemented in hardware and/or software.

### BRIEF DESCRIPTION OF THE DRAWINGS

Further embodiments of the invention will be described with respect to the following figures, wherein:
Figure 1 shows a schematic diagram of a network monitoring entity according to an embodiment;
Figure 2 shows a schematic diagram of a communication system according to an embodiment with a network monitoring entity according to an embodiment;
Figure 3 shows a part of an exemplary probe catalogue implemented in a network monitoring entity according to an embodiment;
Figure 4 shows a schematic diagram illustrating an interaction between two network monitoring entities according to an embodiment across Multi-domain Orchestrators in a communication system according to an embodiment;
Figure 5 shows a schematic diagram illustrating a communication network with a network monitoring entity according to an embodiment as well as several processing steps therein; and
Figure 6 shows a schematic diagram illustrating a network monitoring method according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

As will be described in more detail in the following, embodiments of the invention relate to network entity in the form of an intelligent monitoring system (IMoS), a probe catalogue and relevant interfaces in a Multi-domain Orchestration/Orchestrator (MdO) architecture, which allows improving monitoring accuracy and the overall performance of slice monitoring in a MdO environment.

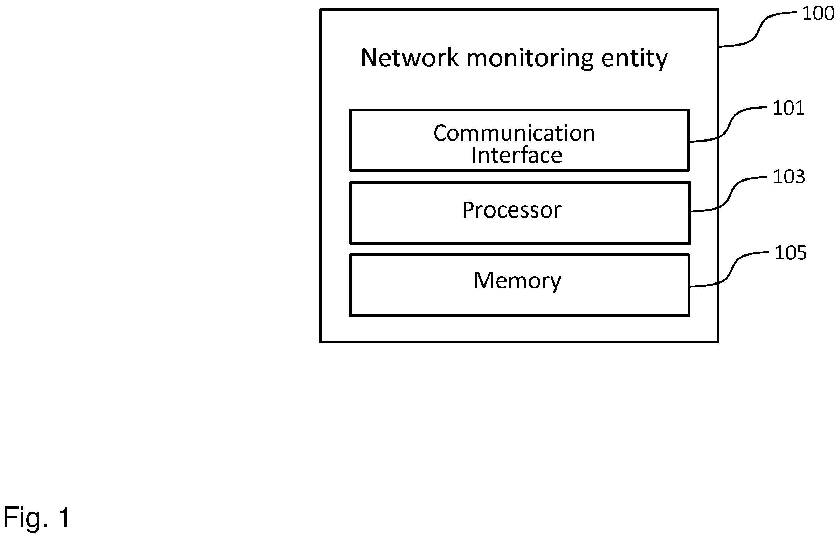

Figure 1 shows a schematic diagram of an embodiment of a network monitoring entity 100 comprising a communication interface 101, a processor 103 and a memory 105. In an embodiment, the network monitoring entity could be implemented as at least one network server.

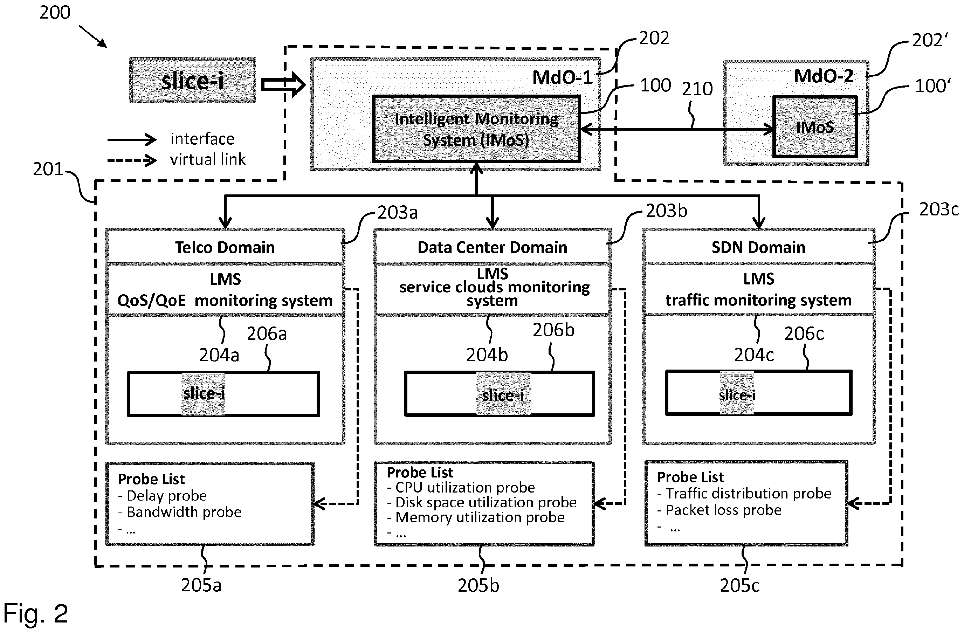

Under further reference to figure 2, the network monitoring entity 100 is configured to perform monitoring in a communication network, such as the communication network 201 of the communication system 200 shown in figure 2. In the embodiment shown in figure 1, the network monitoring unit 100 is implemented in the form of an Intelligent Monitoring System (IMoS). The communication network 201 is configured to support, i.e. implement at least a portion of a network slice, i.e. a portion of or a complete network slice. As illustrated in figure 2, the communication network 201 comprises a multi-domain orchestrator 202 configured to orchestrate a plurality of domains(herein also referred to as sub-networks) 203a-c. Each sub-network 203a-c is configured to support at least respective a sub-portion (204a-c) of the portion of the network slice supported by the communication network 201. In other words, each sub-network 203a-c comprises network resources for supporting at least a respective sub-portion of the portion of the network slice. In the embodiment shown in figure 2, the communication network comprises by way of example a Telco domain 203a, a Data Center domain 203b and a SDN (software defined networking) domain 203c. As will be appreciated, further to the sub-networks 203a-c shown in figure 2 the communication network 200 can comprise further sub-networks, which might not be implemented to support a slice sub-portion, as well as other hardware and/or software resources, such as compute, storage and/or networking resources.

The communication interface 101 of the network monitoring entity 100 is configured to communicate with a plurality of sub-network monitoring units 204a-c, which in the embodiment shown in figure 2 are implemented in the form of Local Monitoring Systems (LMS) 204a-c. Each sub-network monitoring unit 204a-c comprises at least one monitoring probe 205a-c, wherein each monitoring probe 205a-c is configured to monitor, i.e. to provide information about at least one performance measure of the respective sub-portion of the portion of the network slice supported by the respective sub-network 203a-c. In the embodiment shown in figure 2, by way of example, the at least one monitoring probe 205a of the sub-network monitoring unit 204a comprises a delay probe and a bandwidth probe, the at least one monitoring probe 205b of the sub-network monitoring unit 204b comprises a CPU utilization probe, a disk space utilization probe and a memory utilization probe, and the at least one monitoring probe 205c of the sub-network monitoring unit 204c comprises a traffic distribution probe and a packet loss probe. All of these monitoring probes 205a-c of the sub-network monitoring units 204a-c define a set of monitoring probes (herein also referred to as probe catalogue) for the communication network 201. In an embodiment, the probe catalogue can be stored in the memory of the network monitoring entity 100.

The processor 103 of the network monitoring entity 100 is configured to select one or more monitoring probes 205a-c from the set of monitoring probes for monitoring the portion of the network slice 206 supported by the communication network 200, as will be described in more detail further below.

According to embodiments of the invention the one or monitoring probes 205a-c could be provided by a monitoring capability provided by the respective sub-network monitoring unit 204a-c, a monitoring capability provided by one or more Open Flow - enabled switches implemented in the sub-networks 203a-c, a software instance implemented in a network element of the sub-networks 203a-c and/or a dedicated hardware unit of the sub-networks 203a-c.

The communication system 200 shown in figure 2 comprises the network monitoring entity 100 in form of an Intelligent Monitoring System (IMoS) 100 as part of the Multi-domain Orchestration/Orchestrator(MdO) 202 orchestrating the different technological domains or sub-networks 203a-c of the network 201. As illustrated in figure 2, the Intelligent Monitoring System (IMoS) 100 of the Multi-domain Orchestration/Orchestrator(MdO) 202 is configured to communicate via an interface 210 with a further Intelligent Monitoring System (IMoS) 100' of a further Multi-domain Orchestration/Orchestrator(MdO) 202' of a further communication network (not shown in figure 2). In an embodiment, at least a portion of the interface 210 can be provided by the communication interface 101 of the Intelligent Monitoring System (IMoS) 100.

In an embodiment, each MdO 202, 202' is responsible for providing cross-domain service orchestration within its own administration and between other administrations. As already mentioned above, each MdO 202, 202' can comprise one IMoS 100, 100' to manage and coordinate slice monitoring, in particular, to provide intelligent functionalities in probe selection and deployment across the MdOs 202, 202'. According to embodiments of the invention a slice can be deployed either in the different sub-networks 203a-cc of one MdO 202 or across multiple MdOs 202, 202'.

Within a single administration, the IMoS 100 is responsible for managing (sub-)slice monitoring such that the (sub-)slice can be deployed across the different sub-networks 203a-c, as shown in figure 2. Among different administrations, the IMoS 100 can be responsible for exchanging probes, Key Performance Indicators (KPIs), and on-demand probe instantiation with other IMoSs 100' for end-to-end slice monitoring. For example, the probe can be associated with a cost of deployment including both the financial and resource related costs, dependencies to other probes and so on.

As already mentioned above, the different sub-networks 203a-c of the communication network 201 provide their own Local Monitoring Systems (LMSs) 204a-c and possibly different policies. For example, while the LMS 204a in the telco-domain 203a can focus on QoS/QoE monitoring, the LMS 204b in the data-center domain 203b can provide service cloud monitoring. In such a case, each LMS 204a-c should have different probes 205a-c due to different interest of monitoring. Apart from different monitoring probes 205a-c, the probe selection, deployment mechanisms and monitoring policy can differ from each other as well.

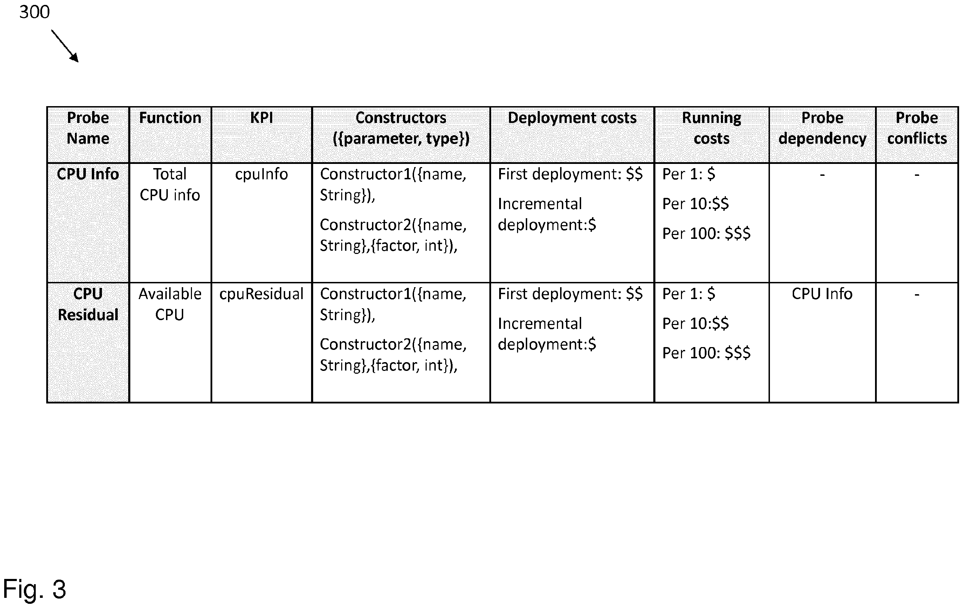

Figure 3 shows a part of a possible structure of an exemplary probe catalogue 300 implemented in the network monitoring entity 100 according to an embodiment. As already described above, the probe catalogue 300 is used to store the probe information from the different technological domains 203a-c of the communication network 201. In order to create the probe catalogue 300, each LMS 204a-c can exchange potential probes information to its IMoS 100. It is sufficient to exchange key information of each probe which will be used in probe selection and deploying the correct probe in the correct domain. In this way, the IMoS 100has a centralized view of probe information from its LMSs 204a-c in each domain.

As will be appreciate, the probe information, which can be exchanged between the LMSs 204a-c and the IMoS 100 is not limited to the exemplary probe information shown in the probe catalogue 300 of figure 3. On the basis of the probe catalogue 300 the IMoS 100 can support intelligent monitoring functions across the MdOs 202, 202'. For example, the probe catalogue 300 can be used for mapping Key Performance Indicators (KPIs) to the corresponding monitoring probes 205a-c as well as for end-to-end probe selection and deployment in slice monitoring. For exchanging the probe catalogue 300 including Key Performance Indicators (KPIs), probe information, costs, dependency, and other related information, relevant interfaces are defined in the IMoS 100, which, in an embodiment, can be implemented as part of the communication interface 101.

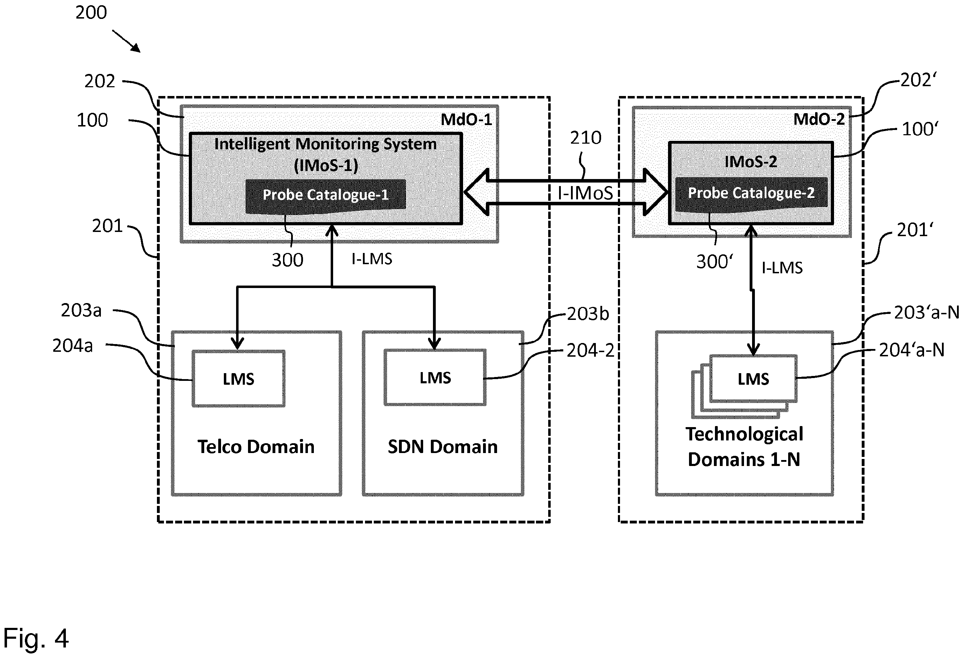

Figure 4 shows a schematic diagram illustrating the interaction between the two Intelligent Monitoring Systems (IMoSs) 100, 100 across Multi-domain Orchestrations/Orchestrators (MdOs) 202, 202' of the communication networks 201, 201' according to an embodiment.

In the embodiment shown in figure 4, the following interfaces can be implemented to collect the probe information and to exchange probes, the probe catalogues 300, 300' as well as the Key Performance Indicator (KPI), and to deploy probes. Firstly, I-LMS is an interface between the IMoS 100 and the LMSs 204a,b used to exchange the probe information and to send the correct probe information to guarantee (sub-)slice monitoring. Secondly, the interface 210, already mentioned above, which in figure 4 is referred to as I-IMoS, is an interface between the IMoSs 100, 100' used to exchange KPIs, probes, and probe catalogues to guarantee end-to-end slice monitoring.

As shown in Figure 4, the IMoS 100 of the MdO 202 can collect probe information from its local domains 204a, 204b via the interface I-LMS. This interface can be a standardized interface to exchange key probe information between the IMoS 100 and its different LMSs 204a, 204b from different sub-networks 203a, 203b. The exchanged probe information from the LMSs 204a, 204b to the IMoS 100 can contain the information as mentioned in the exemplary probe catalogue 300 shown in figure 3. The probe name, function, the corresponding KPI, and parameters can be key information for the probe selection by the processor 103 of the IMoS 100. To provide better intelligent functions in probe deployment, a probe catalogue management system can collect additional information. For example, the IMoS 100 can obtain information about the costs of creating and executing a new probe, the costs of an existing probe, or the costs of combining multiple probes, etc. Therefore, the cost information related to the probes can be exchanged between the LMSs 204a, 204b and the IMoS 100. Together with the above information, probe dependency and conflict can also be exchanged.

Using the collected probe information from the LMSs 204a, 204b, the IMoS 100 can create the probe catalogue 300. The probe catalogue management system implemented in the IMoS 100 can thus decide the correct probe from the correct domain. The information of the correct probe can be sent directly to the respective LMS 204a, 204b located in the correct domain to instantiate the probe directly via the interface I-LMS. To deploy and to instantiate the probe, for instance, a constructor with a specific name, can be sent to the LMS for the KPI of cpulnfo.

The probe catalogue management system implemented in the IMoS 100 is used to support intelligent monitoring functions, in particular, for monitoring probe selection. The monitoring probe selection in the MdO environment should guarantee an end-to-end monitoring probe selection. To ensure that the correct probe is selected from the correct domain in each MdO 202, 202', the interface 210 can be provided for communication between the IMoSs 100, 100'.

The interface I-IMoS 201 can be a standardized interface to exchange KPIs, probes, and probe information between the MdOs 202, 202' shown in figure 4. The information exchanged between the MdOs 202, 202' can provide a partial or an abstract view of the respective network infrastructure, because the administrations are often not willing to share detailed information about their respective network infrastructures. For example, a subset of KPIs in each MdO 202, 202' should be visible across the MdOs 202, 202'. If an on-demand probe deployment is necessary, further probe information, such as probe deployment costs, dependencies, and conflicts should be exchanged between the MdOs 202, 202'.

After the end-to-end monitoring probe selection, the IMoS 100 sends the probe information to the corresponding LMSs 204a, 204b to directly instantiate the correct probes via the interface I-LMS. If necessary, the IMoS 100 can send the information to instantiate a new on-demand probe in the correct domain via the interfaces I-IMoS and/or I-LMS.

According to the embodiments of the invention, the intelligent monitoring system 100 using the probe catalogue can improve the overall system performance by reducing multiple interactions for the probe selection as well as overheads of computation and communication for determining the correct probe from the correct domain.

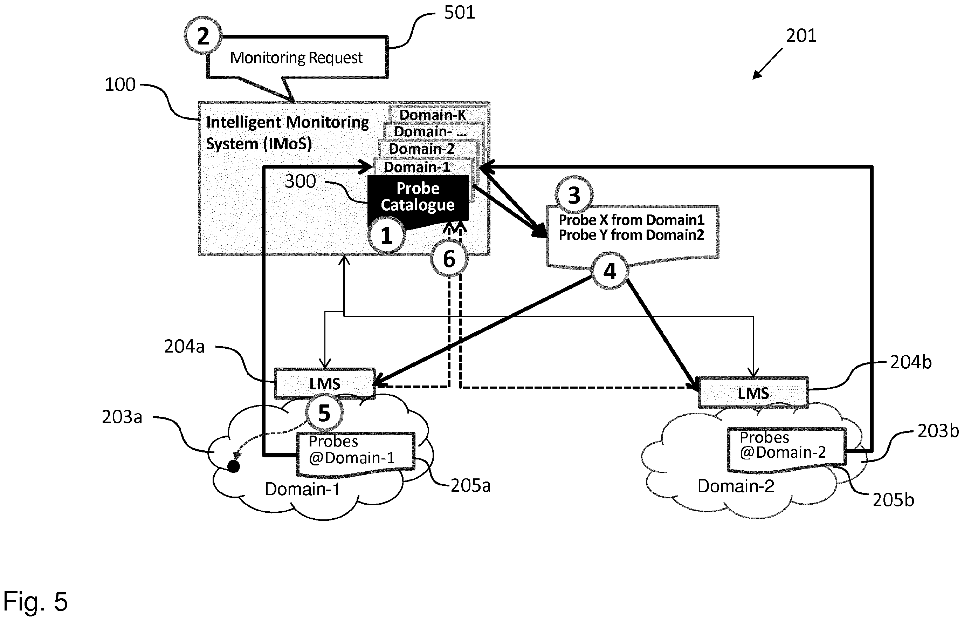

Figure 5 shows a schematic diagram illustrating the communication network 201 with the network monitoring entity in the form of an IMoS 100 according to an embodiment as well as several processing steps performed therein. Generally, the probe catalogue 300 should be available in each MdO and its corresponding IMoS 100 before slices are deployed. As soon as the IMoS 100 starts running, a first step is initialized to exchange probe information between the IMoS 100 and the LMSs 204a, 204b. The procedure comprises the following steps.

In a first step the IMoS 100 collects probe information, for instance, the information shown in the exemplary probe catalogue 300 of figure 3, from the LMSs 204a, 204b via the interface I-LMS and creates the probe catalogue 300. As already mentioned above, the probe catalogue 300 can be used to map the KPIs to the correct probes, and its management system is used to provide an optimal probe deployment.

In a second step the MdO 200 receives a slice monitoring request 501 that can include KPIs and the resources information about where the actual slice is deployed. For this exemplary embodiment, it is assumed that the (sub-) slice is being deployed across different sub-networks 203-a, 203b.

On the basis of the costs of a probe in terms of probe effect, dependency, and dependent cost, the IMoS 100, in particular, its probe management system can decide in a third step the appropriate probes for KPIs for the network resources, where the slice is deployed, namely via the interfaces I-IMoS and I-LMS 210. In an embodiment, the IMoS 100 can run an algorithm to optimize the probe effect and other costs of deployment.

After the selection of the correct probes, the IMoS 100 in a fourth step sends the probe information to the corresponding LMSs 204a, 204b via the interface I-LMS to directly instantiate and deploy the probes at the network resources where the slice is deployed.

In a fifth step each LMS 204a, 204b can directly instantiate the probes sent by the IMoS 100 at the network endpoints.

If any changes happen in the probe configuration, the corresponding LMS 204a, 204b can in a sixth step update the IMoS 100 about the changes via the interface I-LMS. Next, the IMoS 100 can update other IMoSs about the changed information via the interface I-IMoS 210, if necessary. Each LMS 204a, 204b can exchange the local probe information one time during the initial configuration and an update can be performed only if any local change happens, which is, however, expected to be not common.

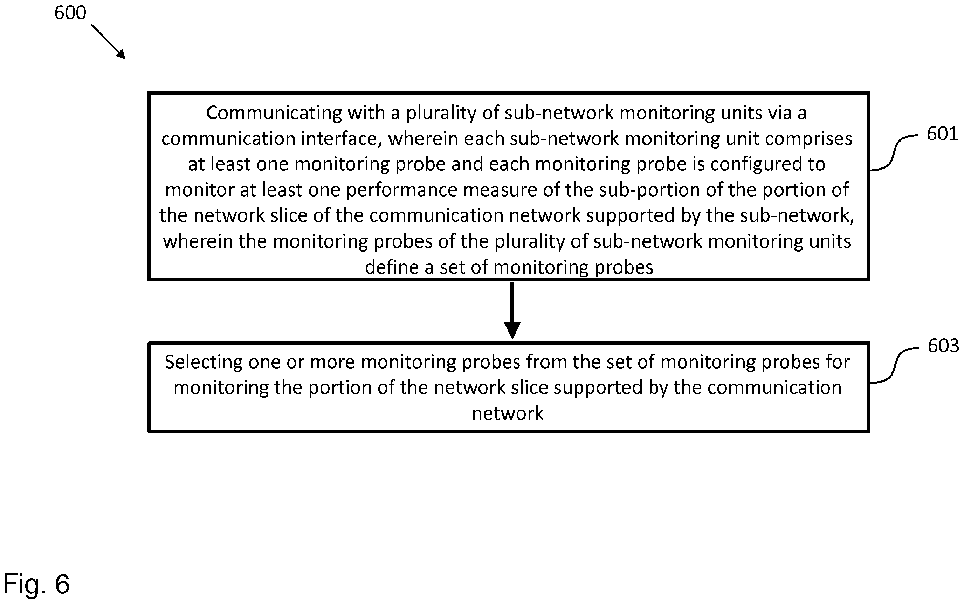

Figure 6 shows a flow diagram illustrating a corresponding network monitoring method 600 for monitoring the communication network 201. The method 600 comprises the steps of: communicating 601 with the plurality of sub-network monitoring units 204a-c via the communication interface 101, wherein each sub-network monitoring unit 204a-c comprises at least one monitoring probe 205a-c and each monitoring probe 205a-c is configured to monitor at least one performance measure of the sub-portion 206a-c of the portion of the network slice supported by the sub-network 203a-c, wherein the monitoring probes 205a-c of the plurality of sub-network monitoring units 204a-c define the probe catalogue 300; and selecting 603 one or more monitoring probes 205a-c from the probe catalogue 300 for monitoring the portion of the network slice of the communication network.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention, as defined by the appended claims.

## Claims

1. A network monitoring entity (100) for a communication network (201) configured to support at least a portion of a network slice, the communication network (201) being a single administration and comprising a plurality of sub-networks (203a-c), each sub-network (203a-c) being a technological domain in the single administration, and being configured to support at least a sub-portion (206a-c) of the portion of the network slice, the network monitoring entity (100) comprising:
a communication interface(101) configured to communicate with a plurality of sub-network monitoring units (204a-c), wherein each sub-network monitoring unit (204a-c) comprises at least one monitoring probe (205a-c) and each monitoring probe (205a-c) is configured to monitor at least one performance measure of the sub-portion (206a-c) of the portion of the network slice supported by the sub-network (203a-c), wherein the monitoring probes (205a-c) of the plurality of sub-network monitoring units (204a-c) define a set of monitoring probes (300); and
a processor (103) configured to select one or more monitoring probes (205a-c) from the set of monitoring probes (300) for monitoring the portion of the network slice of the communication network (201);
wherein a further portion of the network slice is supported by a further communication network (201') and wherein the communication interface (101) of the network monitoring entity (100)
is configured to provide information about the set of monitoring probes (300) to a communication interface of a corresponding further network monitoring entity (100') of the further communication network (201').

2. The network monitoring entity (100) of claim 1, wherein the processor (103) is further configured to inform the one or more sub-network monitoring units (204a-c) associated with the one or more monitoring probes (205a-c) via the communication interface (101) about the selected one or more monitoring probes (205a-c) for deploying the selected one or more monitoring probes (205a-c) in the sub-networks (203a-c).

3. The network monitoring entity (100) of claim 1 or 2, wherein the network monitoring entity (100) further comprises a memory (105) configured to store information about the set of monitoring probes (300).

4. The network monitoring entity (100) of claim 3, wherein the information about the set of monitoring probes (300) comprises information about the at least one performance measure of the sub-portion (206a-c) of the portion of the network slice monitored by a monitoring probe (205a-c), monitoring probe identifiers, monitoring probe deployment costs, monitoring probe execution costs, monitoring probe dependencies on the existence of other monitoring probes and/or monitoring probe conflicts with the existence of other monitoring probes or software components.

5. The network monitoring entity (100) of claim 3 or 4, wherein the processor (103) is configured to collect the information about the set of monitoring probes (300) via the communication interface (101) from the plurality of sub-network monitoring units (204a-c).

6. The network monitoring entity (100) of any one of the preceding claims, wherein the processor (103) is further configured to collect from the selected one or more monitoring probes (205a-c) data about the corresponding performance measures of the sub-portion (206a-c) of the portion of the network slice.

7. The network monitoring entity (100) of claim 6, wherein the network monitoring entity (100) further comprises a memory (105) and wherein the processor (103) is configured to store the data collected from the one or more monitoring probes (205a-c) about the corresponding performance measures of the sub-portion (206a-c) of the portion of the network slice in the memory (105).

8. The network monitoring entity (100) of any one of the preceding claims, wherein the processor (103) is configured to select the one or more monitoring probes (205a-c) from the set of monitoring probes (300) for monitoring the portion of the network slice of the communication network (201), in response to a network slice monitoring request received via the communication interface (101).

9. The network monitoring entity (100) of any one of the preceding claims, wherein the at least one performance measure of the sub-portion (206a-c) of the portion of the network slice is a delay measure, a bandwidth measure, a CPU utilization measure, a disk space utilization measure, a memory utilization measure, a data traffic distribution measure and/or a data packet loss measure.

10. A communication system (200) comprising a first communication network (201) and a second communication network (201'), wherein the first and second communication network (200, 201') each comprise a network monitoring entity (100, 100') according to claim 1, and wherein the communication system (200) further comprises an interface (210) configured to exchange monitoring probe information between the network monitoring entities (100, 100').

11. A network monitoring method (600), performed by a network monitoring entity (100), in a communication network (201) configured to support at least a portion of a network slice, the communication network being a single administration and comprising a plurality of sub-networks (203a-c), each sub-network (203a-c) being a technological domain in the single administration, and configured to support at least a sub-portion (206a-c) of the portion of the network slice, the method (600) comprising:
communicating (601) with a plurality of sub-network monitoring units (204a-c) via a communication interface (101), wherein each sub-network monitoring unit (204a-c) comprises at least one monitoring probe (205a-c) and each monitoring probe (205a-c) is configured to monitor at least one performance measure of the sub-portion (206a-c) of the portion of the network slice supported by the sub-network (203a-c), wherein the monitoring probes (205a-c) of the plurality of sub-network monitoring units (204a-c) define a set of monitoring probes (300); and
selecting (603) one or more monitoring probes (205a-c) from the set of monitoring probes (300) for monitoring the portion of the network slice of the communication network;
wherein a further portion of the network slice is supported by a further communication network (201') and wherein the communication interface (101) of the network monitoring entity (100)
is configured to provide information about the set of monitoring probes (300) to a communication interface of a corresponding further network monitoring entity (100') of the further communication network (201').

12. The method (600) of claim 11, wherein the method (600) comprises the further step of informing the one or more sub-network monitoring units (204a-c) associated with the one or more monitoring probes (205a-c) via the communication interface (101) about the selected one or more monitoring probes (205a-c) for deploying the selected one or more monitoring probes (205a-c) in the sub-networks (203a-c).

13. The method (600) of claim 11 or 12, wherein the method (600) comprises the further step of storing information about the set of monitoring probes (300) in a memory (105).

14. A computer program comprising program code adapted to, when executed on a network monitoring unit, to configure the network monitoring unit to perform the steps of the method (600) of any of the claims 11 to 13.

## Patentansprüche

1. Netzüberwachungseinheit (100) für ein Kommunikationsnetz (201), das konfiguriert ist, um wenigstens einen Abschnitt eines Netz-Slice zu unterstützen, wobei das Kommunikationsnetz (201) eine einzelne Verwaltung ist und mehrere Teilnetze (203a-c) umfasst, wobei jedes Teilnetz (203a-c) eine technologische Domäne in der einzelnen Verwaltung ist, und konfiguriert ist, um wenigstens einen Teilbereich (206a-c) des Abschnitts des Netz-Slice zu unterstützen, wobei die Netzüberwachungseinheit (100) Folgendes umfasst:
eine Kommunikationsschnittstelle (101), die konfiguriert ist, um mit mehreren Teilnetzüberwachungseinheiten (204a-c) zu kommunizieren, wobei jede Teilnetzüberwachungseinheit (204a-c) wenigstens eine Überwachungssonde (205a-c) umfasst und jede Überwachungssonde (205a-c) konfiguriert ist, um wenigstens ein Leistungsmaß des Teilabschnitts (206a-c) des Abschnitts des Netz-Slice zu überwachen, der von dem Teilnetz (203a-c) unterstützt wird, wobei die Überwachungssonden (205a-c) der mehreren Teilnetzüberwachungseinheiten (204a-c) einen Satz von Überwachungssonden (300) definieren; und
einen Prozessor (103), der konfiguriert ist, um eine oder mehrere Überwachungssonden (205a-c) aus dem Satz von Überwachungssonden (300) zum Überwachen des Abschnitts des Netz-Slice des Kommunikationsnetzes (201) auszuwählen;
wobei ein weiterer Abschnitt des Netz-Slice von einem weiteren Kommunikationsnetz (201') unterstützt wird und wobei die Kommunikationsschnittstelle (101) der Netzüberwachungseinheit (100) konfiguriert ist, um Informationen über den Satz von Überwachungssonden (300) einer Kommunikationsschnittstelle einer entsprechenden weiteren Netzüberwachungseinheit (100') des weiteren Kommunikationsnetzes (201') bereitzustellen.

2. Netzüberwachungseinheit (100) nach Anspruch 1, wobei der Prozessor (103) ferner konfiguriert ist, um die eine oder die mehreren Teilnetzüberwachungseinheiten (204a-c), die der einen oder den mehreren Überwachungssonden (205a-c) zugeordnet sind, mittels der Kommunikationsschnittstelle (101) über die ausgewählte eine oder die ausgewählten mehreren Überwachungssonden (205a-c) zum Einsetzen der ausgewählten einen oder der ausgewählten mehreren Überwachungssonden (205a-c) in den Teilnetzen (203a-c) zu informieren.

3. Netzüberwachungseinheit (100) nach Anspruch 1 oder 2, wobei die Netzüberwachungseinheit (100) ferner einen Speicher (105) umfasst, der konfiguriert ist, um Informationen über den Satz von Überwachungssonden (300) zu speichern.

4. Netzüberwachungseinheit (100) nach Anspruch 3, wobei die Informationen über den Satz von Überwachungssonden (300) Informationen über das wenigstens eine Leistungsmaß des Teilabschnitts (206a-c) des Abschnitts des Netz-Slice, der von einer Überwachungssonde (205a-c) überwacht wird, Überwachungssondenkennungen, Überwachungssondeneinsatzkosten, Überwachungssondenausführungskosten, Überwachungssondenabhängigkeiten von dem Vorhandensein anderer Überwachungssonden und/oder Überwachungssondenkonflikte mit dem Vorhandensein anderer Überwachungssonden oder Softwarekomponenten umfassen.

5. Netzüberwachungseinheit (100) nach Anspruch 3 oder 4, wobei der Prozessor (103) konfiguriert ist, um die Informationen über den Satz von Überwachungssonden (300) mittels der Kommunikationsschnittstelle (101) aus den mehreren Teilnetzüberwachungseinheiten (204a-c) zu sammeln.

6. Netzüberwachungseinheit (100) nach einem der vorhergehenden Ansprüche, wobei der Prozessor (103) ferner konfiguriert ist, um aus der ausgewählten einen oder den ausgewählten mehreren Überwachungssonden (205a-c) Daten über die entsprechenden Leistungsmaße des Teilabschnitts (206a-c) des Abschnitts des Netz-Slice zu sammeln.

7. Netzüberwachungseinheit (100) nach Anspruch 6, wobei die Netzüberwachungseinheit (100) ferner einen Speicher (105) umfasst und wobei der Prozessor (103) konfiguriert ist, um die aus der einen oder den mehreren Überwachungssonden (205a-c) über die entsprechenden Leistungsmaße des Teilabschnitts (206a-c) des Abschnitts des Netz-Slice gesammelten Daten in dem Speicher (105) zu speichern.

8. Netzüberwachungseinheit (100) nach einem der vorhergehenden Ansprüche, wobei der Prozessor (103) konfiguriert ist, um die eine oder die mehreren Überwachungssonden (205a-c) aus dem Satz von Überwachungssonden (300) zum Überwachen des Abschnitts des Netz-Slice des Kommunikationsnetzes (201) als Reaktion auf eine Netz-Slice-Überwachungsanforderung, die mittels der Kommunikationsschnittstelle (101) empfangen wird, auszuwählen.

9. Netzüberwachungseinheit (100) nach einem der vorhergehenden Ansprüche, wobei das wenigstens eine Leistungsmaß des Teilabschnitts (206a-c) des Abschnitts des Netz-Slice ein Verzögerungsmaß, ein Bandbreitenmaß, ein CPU-Auslastungsmaß, ein Speicherplatzauslastungsmaß, ein Speicherauslastungsmaß, ein Datenverkehrsverteilungsmaß und/oder ein Datenpaketverlustmaß ist.

10. Kommunikationssystem (200), das ein erstes Kommunikationsnetz (201) und ein zweites Kommunikationsnetz (201') umfasst, wobei das erste und das zweite Kommunikationsnetz (200, 201') jeweils eine Netzüberwachungseinheit (100, 100') nach Anspruch 1 umfassen und wobei das Kommunikationssystem (200) ferner eine Schnittstelle (210) umfasst, die konfiguriert ist, um Überwachungssondeninformationen zwischen den Netzüberwachungseinheiten (100, 100') auszutauschen.

11. Netzüberwachungsverfahren (600), das von einer Netzüberwachungseinheit (100) in einem Kommunikationsnetz (201) durchgeführt wird, das konfiguriert ist, um wenigstens einen Abschnitt eines Netz-Slice zu unterstützen, wobei das Kommunikationsnetz eine einzelne Verwaltung ist und mehrere Teilnetze (203a-c) umfasst, wobei jedes Teilnetz (203a-c) eine technologische Domäne in der einzelnen Verwaltung ist, und konfiguriert ist, um wenigstens einen Teilbereich (206a-c) des Abschnitts des Netz-Slice zu unterstützen, wobei das Verfahren (600) Folgendes umfasst:
Kommunizieren (601) mit mehreren Teilnetzüberwachungseinheiten (204a-c) mittels einer Kommunikationsschnittstelle (101), wobei jede Teilnetzüberwachungseinheit (204a-c) wenigstens eine Überwachungssonde (205a-c) umfasst und jede Überwachungssonde (205a-c) konfiguriert ist, um wenigstens ein Leistungsmaß des Teilabschnitts (206a-c) des Abschnitts des Netz-Slice zu überwachen, der von dem Teilnetz (203a-c) unterstützt wird, wobei die Überwachungssonden (205a-c) der mehreren Teilnetzüberwachungseinheiten (204a-c) einen Satz von Überwachungssonden (300) definiert; und
Auswählen (603) einer oder mehrerer Überwachungssonden (205a-c) aus dem Satz von Überwachungssonden (300) zum Überwachen des Abschnitts des Netz-Slice des Kommunikationsnetzes;
wobei ein weiterer Abschnitt des Netz-Slice von einem weiteren Kommunikationsnetz (201') unterstützt wird und wobei die Kommunikationsschnittstelle (101) der Netzüberwachungseinheit (100) konfiguriert ist, um Informationen über den Satz von Überwachungssonden (300) einer Kommunikationsschnittstelle einer entsprechenden weiteren Netzüberwachungseinheit (100') des weiteren Kommunikationsnetzes (201') bereitzustellen.

12. Verfahren (600) nach Anspruch 11, wobei das Verfahren (600) den weiteren Schritt des Informierens der einen oder der mehreren Teilnetzüberwachungseinheiten (204a-c), die der einen oder den mehreren Überwachungssonden (205a-c) zugeordnet sind, mittels der Kommunikationsschnittstelle (101) über die ausgewählte eine oder die ausgewählten mehreren Überwachungssonden (205a-c) zum Einsetzen der ausgewählten einen oder der ausgewählten mehreren Überwachungssonden (205a-c) in den Teilnetzen (203a-c) umfasst.

13. Verfahren (600) nach Anspruch 11 oder 12, wobei das Verfahren (600) den weiteren Schritt des Speicherns von Informationen über den Satz von Überwachungssonden (300) in einem Speicher (105) umfasst.

14. Computerprogramm, das Programmcode umfasst, der angepasst ist, wenn er auf einer Netzüberwachungseinheit ausgeführt wird, die Netzüberwachungseinheit zu konfigurieren, um die Schritte des Verfahrens (600) nach einem der Ansprüche 11 bis 13 durchzuführen.

## Revendications

1. Entité de surveillance de réseau (100) pour un réseau de communication (201) configuré pour prendre en charge au moins une partie d'une tranche de réseau, le réseau de communication (201) étant une seule administration et comprenant une pluralité de sous-réseaux (203a-c), chaque sous-réseau (203a-c) étant un domaine technologique dans l'administration unique, et étant configuré pour prendre en charge au moins une sous-partie (206a-c) de la partie de la tranche de réseau, l'entité de surveillance de réseau (100) comprenant :
une interface de communication (101) configurée pour communiquer avec une pluralité d'unités de surveillance de sous-réseau (204a-c), chaque unité de surveillance de sous-réseau (204a-c) comprenant au moins une sonde de surveillance (205a-c) et chaque sonde de surveillance (205a-c) est configurée pour surveiller au moins une mesure de performance de la sous-partie (206a-c) de la partie de la tranche de réseau prise en charge par le sous-réseau (203a-c), les sondes de surveillance (205a-c) de la pluralité d'unités de surveillance de sous-réseau (204a-c) définissent un ensemble de sondes de surveillance (300) ; et
un processeur (103) configuré pour sélectionner une ou plusieurs sondes de surveillance (205a-c) à partir de l'ensemble de sondes de surveillance (300) pour surveiller la partie de la tranche de réseau du réseau de communication (201) ;
une autre partie de la tranche de réseau étant prise en charge par un autre réseau de communication (201') et l'interface de communication (101) de l'entité de surveillance de réseau (100) étant configurée pour fournir des informations sur l'ensemble de sondes de surveillance (300) à une interface de communication d'une autre entité de surveillance de réseau correspondante (100') de l'autre réseau de communication (201').

2. Entité de surveillance de réseau (100) selon la revendication 1, dans laquelle le processeur (103) est en outre configuré pour informer la ou les unités de surveillance de sous-réseau (204a-c) associées à la ou aux sondes de surveillance (205a-c) par l'intermédiaire de l'interface de communication (101) autour de la ou des sondes de surveillance sélectionnées (205a-c) pour déployer la ou les sondes de surveillance sélectionnées (205a-c) dans les sous-réseaux (203a-c).

3. Entité de surveillance de réseau (100) selon la revendication 1 ou 2, dans laquelle l'entité de surveillance de réseau (100) comprend en outre une mémoire (105) configurée pour stocker des informations concernant l'ensemble de sondes de surveillance (300).

4. Entité de surveillance de réseau (100) selon la revendication 3, dans laquelle les informations concernant l'ensemble de sondes de surveillance (300) comprennent des informations concernant l'au moins une mesure de performance de la sous-partie (206a-c) de la partie du la tranche de réseau surveillée par une sonde de surveillance (205a-c), surveillant des identifiants de sonde, surveillant des coûts de déploiement de sonde, surveillant des coûts d'exécution de sonde, surveillant des dépendances de sonde sur l'existence d'autres sondes de surveillance et/ou surveillant des conflits de sonde avec l'existence d'autres sondes de surveillance ou de composants logiciels.

5. Entité de surveillance de réseau (100) selon la revendication 3 ou 4, dans laquelle le processeur (103) est configuré pour collecter les informations concernant l'ensemble de sondes de surveillance (300) par l'intermédiaire de l'interface de communication (101) à partir de la pluralité d'unités de surveillance de sous-réseau (204a-c).

6. L'entité de surveillance de réseau (100) selon l'une quelconque des revendications précédentes, dans laquelle le processeur (103) est en outre configuré pour collecter à partir de la ou des sondes de surveillance sélectionnées (205a-c) des données concernant les mesures de performance correspondantes de la sous-partie (206a-c) de la partie de la tranche de réseau.

7. Entité de surveillance de réseau (100) selon la revendication 6, dans laquelle l'entité de surveillance de réseau (100) comprend en outre une mémoire (105) et dans lequel le processeur (103) est configuré pour stocker les données collectées à partir de la ou des sondes de surveillance (205a-c) concernant les mesures de performance correspondantes de la sous-partie (206a-c) de la partie de la tranche de réseau dans la mémoire (105).

8. Entité de surveillance de réseau (100) selon l'une quelconque des revendications précédentes, dans laquelle le processeur (103) est configuré pour sélectionner la ou les sondes de surveillance (205a-c) à partir de l'ensemble de sondes de surveillance (300) pour surveiller la partie de la tranche de réseau du réseau de communication (201), en réponse à une demande de surveillance de tranche de réseau reçue par l'intermédiaire de l'interface de communication (101).

9. Entité de surveillance de réseau (100) selon l'une quelconque des revendications précédentes, dans laquelle l'au moins une mesure de performance de la sous-partie (206a-c) de la partie de la tranche de réseau est une mesure de retard, une mesure de bande passante, une mesure d'utilisation de l'UC, une mesure d'utilisation d'espace disque, une mesure d'utilisation de mémoire, une mesure de distribution de trafic de données et/ou une mesure de perte de paquets de données.

10. Système de communication (200) comprenant un premier réseau de communication (201) et un second réseau de communication (201'), les premier et second réseaux de communication (200, 201') comprenant chacun une entité de surveillance de réseau (100, 100') selon la revendication 1, et dans lequel le système de communication (200) comprend en outre une interface (210) configurée pour échanger des informations de sonde de surveillance entre les entités de surveillance de réseau (100, 100').

11. Procédé de surveillance de réseau (600), exécuté par une entité de surveillance de réseau (100), dans un réseau de communication (201) configuré pour prendre en charge au moins une partie d'une tranche de réseau, le réseau de communication étant une seule administration et comprenant une pluralité de sous-réseaux (203a-c), chaque sous-réseau (203a-c) étant un domaine technologique dans l'administration unique, et configuré pour prendre en charge au moins une sous-partie (206a-c) de la partie de la tranche de réseau, le procédé (600) comprenant :
la communication (601) avec une pluralité d'unités de surveillance de sous-réseau (204a-c) par l'intermédiaire d'une interface de communication (101), chaque unité de surveillance de sous-réseau (204a-c) comprenant au moins une sonde de surveillance (205a-c) et chaque sonde de surveillance (205a-c) étant configurée pour surveiller au moins une mesure de performance de la sous-partie (206a-c) de la partie de la tranche de réseau prise en charge par le sous-réseau (203a-c), les sondes de surveillance (205a-c) de la pluralité d'unités de surveillance de sous-réseau (204a-c) définissant un ensemble de sondes de surveillance (300) ; et
la sélection (603) d'une ou plusieurs sondes de surveillance (205a-c) dans l'ensemble de sondes de surveillance (300) pour surveiller la partie de la tranche de réseau du réseau de communication ;
une autre partie de la tranche de réseau étant prise en charge par un autre réseau de communication (201') et l'interface de communication (101) de l'entité de surveillance de réseau (100) étant configurée pour fournir des informations sur l'ensemble de sondes de surveillance (300) à une interface de communication d'une autre entité de surveillance de réseau correspondante (100') de l'autre réseau de communication (201').

12. Procédé (600) selon la revendication 11, dans lequel le procédé (600) comprend l'étape supplémentaire consistant à informer la ou les unités de surveillance de sous-réseau (204a-c) associées à la ou aux sondes de surveillance (205a-c) par l'intermédiaire de l'interface de communication (101) concernant la ou les sondes de surveillance sélectionnées (205a-c) pour déployer la ou les sondes de surveillance sélectionnées (205a-c) dans les sous-réseaux (203a-c).

13. Procédé (600) selon la revendication 11 ou 12, dans lequel le procédé (600) comprend l'étape supplémentaire de stockage d'informations concernant l'ensemble de sondes de surveillance (300) dans une mémoire (105).

14. Programme informatique comprenant un code de programme adapté pour, lorsqu'il est exécuté sur une unité de surveillance de réseau, configurer l'unité de surveillance de réseau pour exécuter les étapes du procédé (600) de l'une quelconque des revendications 11 à 13.
